Europäisches Patentamt

European Patent Office

Office européen des brevets

(11) Publication number: **0 031 432**
**B1**

(12) **EUROPEAN PATENT SPECIFICATION**

(45) Date of publication of patent specification: **25.09.85**

(21) Application number: **80107036.8**

(22) Date of filing: **14.11.80**

(51) Int. Cl.⁴: **G 11 B 5/48,** G 11 B 5/60, G 11 B 5/127

(54) **Magnetic head mount assembly.**

(30) Priority: **26.12.79 US 107103**

(43) Date of publication of application:
**08.07.81 Bulletin 81/27**

(45) Publication of the grant of the patent:
**25.09.85 Bulletin 85/39**

(84) Designated Contracting States:
**DE FR GB**

(56) References cited:
**DE-A-1 956 217**
**US-A-3 007 146**
**US-A-3 268 877**
**US-A-3 299 218**
**US-A-4 003 091**

**IBM TECHNICAL DISCLOSURE BULLETIN,**
volume 20, no. 5, October 1977 NEW YORK (US)
J.P.G. DUNMAN et al.: "Actuator assembly for
a disk file", pages 1984-1985

(73) Proprietor: **International Business Machines Corporation**
**Old Orchard Road**
**Armonk, N.Y. 10504 (US)**

(72) Inventor: **Cox, Allen Ronald**
**62 Peverells Wood Avenue**
**Chandlers Ford Hampshire (GB)**
Inventor: **Smathers, Edmond Watkinson**
**Deer Trail Road, JSR**
**Boulder Colorado 80302 (US)**

(74) Representative: **Hobbs, Francis John et al**
**IBM United Kingdom Patent Operations Hursley Park**
**Winchester, Hants, SO21 2JN (GB)**

Courier Press, Leamington Spa, England.

## Description

This invention relates to a magnetic head mount assembly.

Presently known magnetic head mount assemblies employ a head slider mount which is bonded to a mounting bracket for machining, and then mounted to an actuator arm. This type of head arm assembly requires a multiplicity of machining operations, alignment procedures, and a large number of components for proper assembly. A major problem is to control the stack-up of tolerances for each assembly so that during mass production, the head arm assemblies are uniform and interchangeable.

Thus the objects of this invention are to provide an improved magnetic head mount assembly which can be fabricated as a unit and readily mass produced, which requires less assembly operations during production, thereby reducing time and costs, which requires less components than prior art head arm assemblies, and which incorporates a good tooling reference during production, affording a reduced tolerance build-up.

US—A—3,268,877 discloses an assembly including a mounting post secured in an aperture in a support member so that the post is perpendicular to the support member. A magnetic head is mounted in a bore in the free end of the post and an air guide plate is attached to the perimeter of the post so that it surrounds the magnetic head. The magnetic head comprises a magnetic core surrounded by an annular coil former. The outer surfaces of the coil former and the air guide plate are flush with the end of the post, but the magnetic core protrudes slightly beyond the end of the post.

US—A—3,299,218 discloses magnetic head which comprises a magnetic core sandwiched between a pair of non-magnetic spacer slabs. However, the magnetic head disclosed in this prior publication is cylindrically shaped and quite different from the air-bearing slider type of head with which the present invention is concerned. US—A—3,299,218 does not disclose any mounting arrangement for the magnetic head.

The present invention provides a magnetic head mount assembly including an air bearing slider comprising a magnetic transducer core, a mounting post for the slider, the mounting post having one end closely fitting and secured in at least one aperture in a support member so that the post is substantially perpendicular to the support member, the slider being fixed to the free end of the post and spanning at least one slot therein, the assembly being characterised by the slider further comprising a pair of supporting slabs between which the transducer core is sandwiched and by the slider being mounted on the end face of the free end of the post by fixing the surface of the slider opposite to that of its bearing surface to the end face of the post.

Embodiments of the invention will be described with reference to the accompanying drawings, in which:

FIGURE 1 is an isometric view, partly cut away, of a magnetic head mount assembly according to one embodiment of this invention;

FIGURE 2 is a three-dimensional enlarged view of a portion of the magnetic head mount assembly of FIG. 1; and

FIGURE 3 is a three-dimensional enlarged view of a portion of an alternative embodiment of the magnetic head mount assembly.

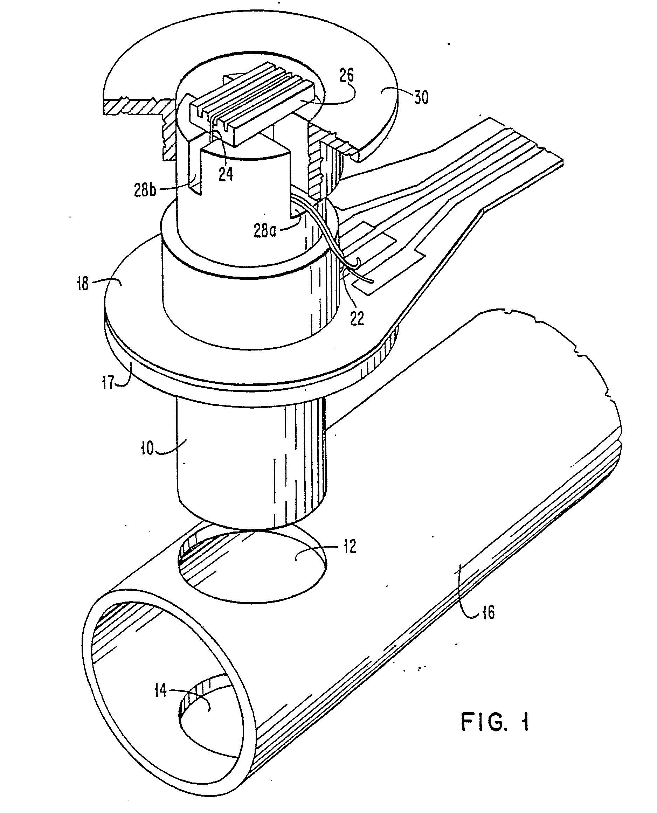

With reference to FIG. 1, a magnetic head mount assembly includes a cylindrical mounting post 10, which may be made of a ceramic material. The post 10 is seated in close-fitting apertures 12 and 14 formed in a hollow frustoconical arm 16 which has an axis substantially perpendicular to the axis of the mounting post 10. The hollow frusto-conical form of the arm reduces mass and thereby enhances access time.

The post 10 is bonded by epoxy to the arm 16. A collar 17 made of plastics material for example is mounted around the post 10 and supports a yoke 18 which is a printed circuit on flexible material, e.g. polymide. The printed circuits on yoke 18 are connected to external circuitry and a power supply (not shown). The printed circuits on 18 are also connected by electrical leads 22 to magnetic ferrite core transducer 24, which forms part of a configured air bearing slider 26, preferably made of barium titanate ceramic. The leads 22 pass through a slot 28a formed in the upper portion of the post 10, over which the slider 26 is positioned. The ferrite core 24 of the slider is partially disposed within a slot 28b that is formed orthogonally to slot 28a.

An annular stabilizer ring 30, such as is disclosed in U.S. Patent 4,003,091 and which is partially shown in FIG. 1, is joined to the upper post portion adjacent to the slots 28a, 28b. The stabilizer ring 30 may be made of chrome plated brass. In operation, the integral head mount assembly is driven for accessing data tracks on a magnetic medium by a bidirectional actuator, such as a voice coil motor (not shown), which is attached at the end of the arm 16 remote from the post 10.

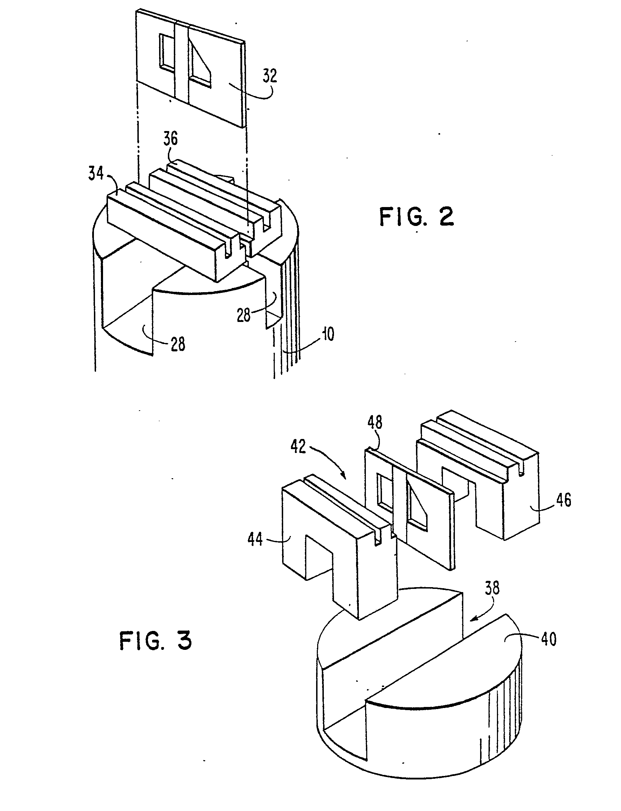

FIG. 2 illustrates in a partial exploded view the positional relationship of the ferrite core transducer 32 of the slider to the supporting slabs 34 and 36, which may be made of barium titanate ceramic, between which the core is bonded. The slabs 34 and 36 enclose the ferrite core transducer 32 and together with the latter form the air bearing slider. In this embodiment, the ferrite core transducer 32 is partially disposed within the slotted portion of post 10 as illustrated in FIG. 1. The position of the ferrite core transducer 32 may be adjusted so that the transducing gap will be precisely located with relation to the head mount assembly and, in effect, with respect to the magnetic medium with which it interacts. The surface of the ferrite core transducer 32 may be ground and lapped to predetermined dimensions to attain a desired throat height.

FIG. 3 depicts, in exploded form, an alternative embodiment wherein a single slot 38 is formed at the top portion of a cylindrical post 40 on which the air bearing slider 42 is seated. The slider 42 includes barium titanate ceramic slabs 44 and 46 which sandwich a ferrite core transducer 48. The sandwiched slider structure is fixed onto the top surface of the slider support 40, which serves as a reference base for determining the position and orientation of the slider 42 and transducer core 48. In addition, the slot 38 serves to accommodate the electrical leads from the printed circuit which connect to the coil associated with the transducer core.

By virtue of this simplified assembly having a reduced number of parts, the magnetic head and mount may be readily mass produced by easy tooling techniques, thus reducing manufacturing time and cost. The mounting post serves as a good tooling reference or datum, and reduces the tolerance stack-up. The ferrite core transducer is less stressed in the disclosed assembly and therefore improved electrical performance and enhanced signal outputs are realized. The completed assembly can be easily mounted to an actuator by direct coupling.

## Claims

1. A magnetic head mount assembly including an air bearing slider (26) comprising a magnetic transducer core (24; 32), a mounting post (10) for the slider (26), the mounting post (10) having one end closely fitting and secured in at least one aperture (12, 14) in a support member (16) so that the post is substantially perpendicular to the support member, the slider (26) being fixed to the free end of the post and spanning at least one slot (28a, 28b) therein, the assembly being characterised by the slider further comprising a pair of supporting slabs (34, 36) between which the transducer core (32) is sandwiched and by the slider (26) being mounted on the end face of the free end of the post (10) by fixing the surface of the slider opposite to that of its bearing surface to the end face of the post.

2. An assembly as claimed in claim 1, in which the free end of the post (10) has a sufficiently large surface area that the slider (26) is disposed within its perimeter so that a peripheral part of the free end of the post is left exposed for use as a reference surface.

3. An assembly as claimed in claim 1 or claim 2, characterised by the support member being an arm and by the post being rigidly bonded in said at least one aperture in the arm so that the slider cannot move relative to the arm.

4. A magnetic head mount assembly as claimed in any preceding claim, further including printed circuit means attached to the post and constituting part of the circuit connections to the magnetic transducer.

5. A magnetic head mount assembly as claimed in claim 4, wherein the circuit connections further include electrical leads which pass through the slotted free end of the post from the printed circuit means to the magnetic transducer.

6. A magnetic head mount assembly as claimed in claim 4 or 5, wherein the printed circuit means comprises a yoke structure surrounding the post.

7. A magnetic head mount assembly as claimed in any preceding claim, wherein the arm is hollow and has two opposing apertures for receiving the post.

8. A magnetic head mount assembly as claimed in claim 7, wherein the arm has a frustoconical configuration.

## Revendications

1. Dispositif de montage de tête magnétique comprenant un patin (26) de palier à air comprenant un noyau (24; 32) de transducteur magnétique, un pilier de montage (10) pour le patin (26), le pilier de montage (10) comportant une extrémité qui s'ajuste étroitement et est fixée dans au moins une ouverture (12, 14) d'un élément de support (16) de sorte que le pilier est sensiblement perpendiculaire à l'élément de support, le patin (26) étant fixé à l'extrémité libre du pilier et enjambant au moins une fente (28a, 28b) formée dans ce pilier, le dispositif étant caractérisé par le fait que le patin comprend, en outre, une paire de plaquettes de support (34, 36) entre lesquelles le noyau (32) de transducteur est pris en sandwich et que le patin (26) est monté sur la face de l'extrémité libre du pilier (10) par fixation de la surface du patin située à l'opposé de la surface de portée de ce dernier à la face d'extrémité du pilier.

2. Dispositif selon la revendication 1, dans lequel l'extrémité libre du pilier (10) a une superficie suffisamment grande pour que le patin (26) soit disposé dans les limites de son périmètre de telle manière qu'une partie périphérique de l'extrémité libre du pilier soit laissée découverte en vue d'être utilisée comme surface de référence.

3. Dispositif selon la revendication 1 ou la revendication 2, caractérisé par le fait que l'élément de support est un bras et que le pilier est fixé rigidement dans ladite ouverture du bras de manière que le patin ne puisse pas se déplacer par rapport au bras.

4. Dispositif de montage de tête magnétique selon n'importe quelle revendication précédente, comprenant en outre un circuit imprimé fixé au pilier et constituant une partie des connexions de circuit du transducteur magnétique.

5. Dispositif de montage de tête magnétique selon la revendication 4, dans lequel les connexions de circuit comprennent, en outre, des conducteurs électriques qui traversent l'extrémité libre fendue du pilier depuis le circuit imprimé jusqu'au transducteur magnétique.

6. Dispositif de montage de tête magnétique selon la revendication 4 ou 5, dans lequel le circuit imprimé comprend une structure de culasse entourant le pilier.

7. Dispositif de montage de tête magnétique selon n'importe quelle revendication précédente, dans lequel le bras est creux et comporte deux ouvertures opposées destinées à recevoir le pilier.

8. Dispositif de montage de tête magnétique selon la revendication 7, dans lequel le bras a une configuration tronconique.

**Patentansprüche**

1. Magnetkopfhalterung, bestehend aus einem Luftlager-Gleitstück (26) mit einem Magnetwandlerkern (24; 32), einem Halterungspfeiler (10) für das Gleitstück (26), wobei der Halterungspfeiler (10) ein in mindestens eine Öffnung (12, 14) eines Trägers (16) genau passendes und darin befestigtes Ende besitzt, sodass der Pfeiler im wesentlichen senkrecht zum Träger steht, wobei das Gleitstück (26) an dem freien Ende des Pfeilers befestigt ist und mindestens einen in diesem Pfeiler angebrachten Spalt überspannt, dadurch gekennzeichnet, dass das Gleitstück ausserdem zwei Trägerstäbe (34, 36) besitzt, zwischen denen der Magnetwandlerkern (32) eingespannt ist und dass das Gleitstück (26) auf die freie Endfläche des Pfeilers (10) montiert ist, wobei die seiner Lagerfläche entgegengesetzte Fläche auf der Endfläche des Pfeilers befestigt ist.

2. Halterung entsprechend Anspruch 1, wobei das freie Ende des Pfeilers (10) über eine genügend grosse Fläche verfügt, um das Gleitstück (26) innerhalb seiner äusseren Begrenzung anzubringen und ein Randstück am freien Ende des Pfeilers frei zu lassen, das als Bezugsfläche dienen kann.

3. Halterung entsprechend Anspruch 1 oder 2, dadurch gekennzeichnet, dass der Träger aus einem Arm besteht und dass der Pfeiler in der an dem Arm angebrachten wenigstens einen Öffnung starr befestigt ist, sodass das Gleitstück sich gegenüber dem Arm nicht verlagern kann.

4. Magnetkopfhalterung entsprechend einem der Ansprüche 1, 2 oder 3, dadurch gekennzeichnet, dass er zusätzlich über eine gedruckte Schaltung verfügt, die auf dem Pfeiler angebracht ist und einen Teil der Stromkreisverbindungen zum Magnetwandler darstellt.

5. Magnetkopfhalterung entsprechend Anspruch 4, wobei die Stromkreisverbindungen ausserdem elektrische Leiter umfassen, die durch das gespaltene freie Ende des Pfeilers von der gedruckten Schaltung bis zum Magnetwandler geführt sind.

6. Magnetkopfhalterung entsprechend Anspruch 4 oder 5, wobei die gedruckte Schaltung eine den Pfeiler umgebende Jochstruktur umfasst.

7. Magnetkopfhalterung entsprechend einem beliebigen der vorhergehenden Ansprüche, wobei der Arm hohl ist und zwei gegenüberliegende Öffnungen zur Aufnahme des Pfeilers besitzt.

8. Magnetkopfhalterung entsprechend Anspruch 7, wobei der Arm die Form eines Kegelstumpfes hat.

FIG. 1

FIG. 2

FIG. 3